# EUROPÄISCHE PATENTANMELDUNG

(11) **EP 2 623 342 A2**
(43) Veröffentlichungstag der Anmeldung: **07.08.2013**
(21) Anmeldenummer: 13150771.7
(22) Anmeldetag: 10.01.2013
(51) Int. Cl.: B60C 15/06

(54) **Fahrzeugluftreifen mit einem Reifenwulst mit einem Kern und einem Kernprofil**

(30) Priorität: 03.02.2012 DE 102012100907
(71) Anmelder: Continental Reifen Deutschland GmbH, 30165 Hannover (DE)
(72) Erfinder: Volk, Heiner, 31535 Neustadt (DE); Voelsen, Peter, 30827 Garbsen (DE); Strübel, Christian, 30559 Hannover (DE); Klucka, Jiri, 02001 Puchov (SK); Leist, Ute, 30173 Hannover (DE); Montalvo, Mario, 30419 Hannover (DE)
(74) Vertreter: Widjaja, Wira

(57) **Zusammenfassung**

Die Erfindung betrifft einen Fahrzeugluftreifen mit einem Reifenwulst mit einem Kern und einem Kernprofil.

Um einen Fahrzeugluftreifen mit einem geringen Rollwiderstand bereitzustellen, wird vorgeschlagen, dass
die Außenseite des Reifenbauteiles mit der Felgenhornmischung in radialer Richtung (14) des Fahrzeugreifens die Höhe des Felgenhornes (4) in radialer Richtung (14) überragt,
wobei zwischen dem Reifenbauteil (4) mit der Felgenhornmischung und dem Reifenbauteil (5) mit der Seitenwandmischung eine Übergangslinie (9) mit einer Neigung angeordnet ist,
wobei die Übergangslinie (9) von dem oberen außenliegenden Eckpunkt (7) des Reifenbauteiles (4) mit der Felgenhornmischung zum unteren innenliegenden Eckpunkt (8) des Reifenbauteiles (4) mit der Felgenhornmischung verläuft,
wobei der Abstand (c) in radialer Richtung des Fahrzeugreifens zwischen dem oberen außenliegenden Eckpunkt (7) und dem unteren innenliegenden Eckpunkt (8) des Reifenbauteiles (4) mit der Felgenhornmischung mindestens 5 mm beträgt.

## Beschreibung

Die Erfindung betrifft einen Fahrzeugluftreifen mit einem Wulstbereich, der die Verbindung zur Felge herstellt.

Es ist bekannt im äußeren Wulst- und Seitenwandbereich eines PKW-Reifens unterschiedliche Gummimischungen einzusetzen. Im Kontaktbereich mit der Felge weist der Reifenwulst im Allgemeinen eine härtere Gummimischung auf. Die sich daran anschließende Seitenwandmischung besteht zumeist aus einer weicheren Gummimischung. Zwischen beiden Reifenbauteilen wird im Allgemeinen ein mehr oder weniger gerader Übergang verwendet. Die Übergangslinie verläuft dabei von einem bestimmten Punkt an der Außenseite des Reifenwulstes im wesentlichen in radialer Richtung des Fahrzeugreifens nach außen, so dass der oberen Eckpunkt höher gelegen ist als der untere Eckpunkt der Übergangslinie. Diese Art der herkömmlichen Reifenkonstruktion hat einen Nachteil im Rollwiderstand..

Der Erfindung liegt die Aufgabe zu Grunde, einen Fahrzeugluftreifen zu schaffen, der einen niedrigen Rollwiderstand aufweist.

Gelöst wird die Aufgabe gemäß den kennzeichnenden Merkmalen des Anspruchs 1 dadurch, dass die Außenseite des Reifenbauteiles mit der Felgenhornmischung in radialer Richtung des Fahrzeugreifens die Höhe des Felgenhornes in radialer Richtung überragt,
wobei zwischen dem Reifenbauteil mit der Felgenhornmischung und dem Reifenbauteil mit der Seitenwandmischung eine Übergangslinie mit einer Neigung angeordnet ist,
wobei die Übergangslinie von dem oberen außenliegenden Eckpunkt des Reifenbauteiles mit der Felgenhornmischung zum unteren innenliegenden Eckpunkt des Reifenbauteiles mit der Felgenhornmischung verläuft,
wobei der Abstand in radialer Richtung des Fahrzeugreifens zwischen dem oberen außenliegenden Eckpunkt und dem unteren innenliegenden Eckpunkt des Reifenbauteiles mit der Felgenhornmischung mindestens 5 mm beträgt.

Ein Vorteil des erfindungsgemäßen Reifenwulstes ist insbesondere darin zu sehen, dass der Fahrzeugluftreifen durch die neuartige Reifenkonstruktion einen geringeren Rollwiderstand aufweist gegenüber einer herkömmlichen Reifenkonstruktion. Der erfindungsgemäße Reifenwulst weist insgesamt einen höheren Anteil an weicher Gummimischung auf. Durch das Versetzen der Übergangslinie wird das Reifenbauteil mit der weicheren Seitenwandmischung ebenfalls weiter nach unten versetzt. Die Seitenwandmischung besteht aus einer weichen Gummimischung, die sich insgesamt positiv auf den Rollwiderstand des Fahrzeugreifens auswirkt. Gleichzeitig überdeckt das Reifenbauteil mit der härteren Felgenhornmischung vollständig das gesamte Felgenhorn. Dadurch weist der Reifenwulst im Kontaktbereich mit der Felge einen ausreichend hohen Widerstand gegen entsprechende Anscheuerungen auf.

In einer vorteilhaften Weiterbildung der Erfindung ist vorgesehen, dass der Abstand in radialer Richtung des Fahrzeugreifens zwischen dem oberen außenliegenden Eckpunkt und dem unteren innenliegenden Eckpunkt des Reifenbauteiles mit der Felgenhornmischung mindestens 10 mm beträgt. Dadurch wird ein spitzwinkliger Übergang zwischen beiden Reifenbauteilen erreicht. Die Kontaktfläche zwischen beiden Reifenbauteilen ist dadurch groß genug, damit die Haltbarkeit des Reifenwulstes nicht gefährdet wird.

In einer weiteren vorteilhaften Weiterbildung der Erfindung ist vorgesehen, dass die Höhe des Reifenbauteiles mit der Felgenhornmischung in radialer Richtung des Fahrzeugreifens um mindestens 5 mm die Höhe des Felgenhornes in radialer Richtung überragt. Dadurch wird sichergestellt, dass die Haltbarkeit des Reifenwulstes nicht durch Reibungen mit dem Felgenhorn beeinträchtigt wird.

In einer weiteren vorteilhaften Weiterbildung der Erfindung ist vorgesehen, dass der untere innenliegende Eckpunkt des Reifenbauteiles mit der Felgenhornmischung in radialer Richtung des Fahrzeugreifens unterhalb der Höhe des Felgenhornes in radialer Richtung liegt und der Abstand mindestens 5 mm beträgt. Auf diese Weise wird ein möglichst großer Anteil an weicher Gummimischung im Reifenwulst angeordnet, um den Rollwiderstand des Fahrzeugreifens insgesamt zu reduzieren.

In einer weiteren vorteilhaften Weiterbildung der Erfindung ist vorgesehen, dass die Höhe des oberen außenliegenden Eckpunktes des Reifenbauteiles mit der Felgenhornmischung bezogen auf den unteren Felgeneckpunkt des Reifenwulstes zwischen 20 und 30 mm beträgt. Dadurch weist der Reifenwulst insgesamt einen hohen Anteil an weicher Gummimischung auf, die den Rollwiderstand des Fahrzeugreifens insgesamt reduziert.

In einer weiteren vorteilhaften Weiterbildung der Erfindung ist vorgesehen, dass die Höhe des unteren innenliegenden Eckpunktes des Reifenbauteiles mit der Felgenhornmischung bezogen auf den unteren Felgeneckpunkt des Reifenwulstes zwischen 5 und 20 mm, vorzugsweise ca. 10 mm, beträgt.

In einer weiteren vorteilhaften Weiterbildung der Erfindung ist vorgesehen, dass bei einem SUV-Reifen die Höhe des oberen außenliegenden Eckpunktes des Reifenbauteiles mit der Felgenhornmischung bezogen auf den unteren Felgeneckpunkt des Reifenwulstes zwischen 25 und 30 mm beträgt, wobei die Höhe des unteren innenliegenden Eckpunktes des Reifenbauteiles mit der Felgenhornmischung bezogen auf den unteren Felgeneckpunkt des Reifenwulstes zwischen 15 und 20 mm beträgt.

Anhand eines Ausführungsbeispieles soll die Erfindung näher erläutert werden. Es zeigt:

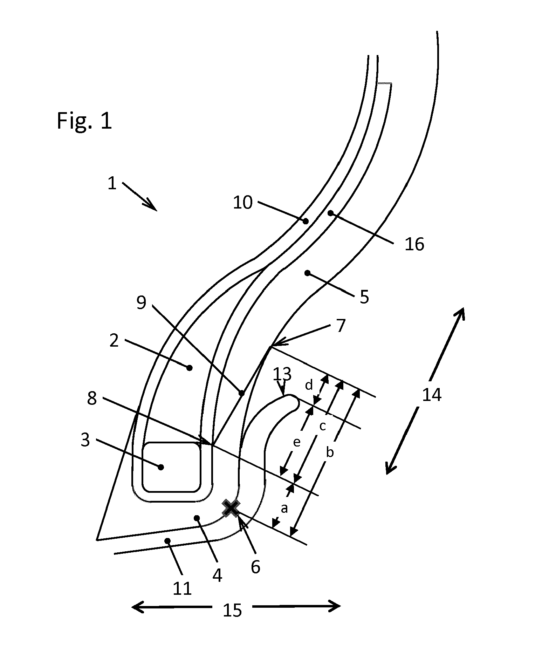

- Fig. 1:: einen Reifenwulst.

Die Figur 1 zeigt schematisch den Reifenwulst 1 des erfindungsgemäßen Fahrzeugluftreifens mit dem Kernprofil 2. Es handelt sich bei dieser Figur um eine Radialschnittansicht des Fahrzeugluftreifens, bei der das Kernprofil 2 und der Kern 3 als Querschnittsprofil dargestellt sind. In der Figur ist der rechte Reifenwulst 1 dargestellt und die unter Druckluft stehende Reifeninnenseite 16 liegt auf der linken Seite des Reifenwulstes 1. Das Kernprofil 2 kann sich aus mehreren Kernprofilteilen zusammensetzen.

Die Karkasseinlage 10 umschlingt den Kern bzw. Reifenkern 3 mit dem Lagenumschlag 16. Der Reifenwulst 1 weist das Reifenbauteil 4 mit der Felgenhornmischung und das Reifenbauteil 5 mit der Seitenwandmischung auf. Beide Reifenbauteile werden durch die Übergangslinie 9 getrennt. Die Übergangslinie 9 endet auf der Außenseite des Reifenwulstes 1 im oberen außenliegenden Eckpunkt 7. Innenliegend im Reifenwulst endet die Übergangslinie 9 am unteren innenliegenden Eckpunkt 8. Der Felgeneckpunkt 6 am Reifenwulst 1 ist der Bezugspunkt am Reifenwulst, von dem aus die Abstände a - e gemessen werden. Der Felgeneckpunkt 6 stellt den äußeren unteren Eckpunkt des Reifenwulstes 1 in axialer Richtung 15 dar. Der Abstand a ist der Abstand zwischen dem Felgeneckpunkt 6 und dem unteren innenliegenden Eckpunkt 8. Der Abstand b ist der Abstand zwischen dem Felgeneckpunkt 6 und dem oberen außenliegenden Eckpunkt 7. Der Abstand c ist der Abstand zwischen dem oberen Eckpunkt 7 und dem unteren Eckpunkt 8, wobei dieser Abstand mindestens 10 mm betragen sollte. Der Abstand e ist der Abstand zwischen der Oberkante 13 des Felgenhornes 12 und dem unteren Eckpunkt 8. Der Abstand d ist der Abstand zwischen dem oberen außenliegenden Eckpunkt 7 und der Oberkante 13 des Felgenhornes 12. Der Abstand d sollte mindestens 3 mm betragen, damit das Felgenhorn vollständig mit der härteren Gummimischung abgedeckt wird. Das Reifenbauteil 4 mit der härteren Gummimischung deckt den gesamten Kontaktbereich mit der Felge 11 und dem Felgenhorn 12 ab. Durch die spezielle Anordnung der Übergangslinie 9 im Reifenwulst 1 wird der Rollwiderstand des Fahrzeugluftreifens insgesamt reduziert, indem der Anteil der harten Felgenhornmischung zugunsten der weichen Seitenwandmischung verringert wird.

### Bezugszeichenliste

### (ist Teil der Beschreibung)

- 1: Reifenwulst
- 2: Kernprofil
- 3: Kern
- 4: Reifenbauteil mit Felgenhornmischung
- 5: Reifenbauteil mit Seitenwandmischung
- 6: Felgeneckpunkt am Reifenwulst
- 7: oberer außenliegender Eckpunkt des Reifenbauteiles mit der Felgenhornmischung
- 8: unterer innenliegender Eckpunkt des Reifenbauteiles mit der Felgenhornmischung
- 9: Übergangslinie
- 10: Karkasseinlage
- 11: Felge
- 12: Felgenhorn
- 13: Oberkante des Felgenhornes
- 14: radiale Richtung
- 15: axiale Richtung
- 16: Lagenumschlag
- a: Abstand in radialer Richtung zwischen unteren innenliegenden Eckpunkt und Felgeneckpunkt
- b: Abstand in radialer Richtung zwischen oberen außenliegenden Eckpunkt und Felgeneckpunkt
- c: Abstand in radialer Richtung zwischen oberen außenliegenden Eckpunkt und unteren innenliegenden Eckpunkt
- d: Abstand in radialer Richtung zwischen oberen außenliegenden Eckpunkt und Oberkante des Felgenhornes
- e: Abstand in radialer Richtung zwischen unteren innenliegenden Eckpunkt und Oberkante des Felgenhornes

## Patentansprüche

1. Fahrzeugluftreifen mit einem Laufstreifen, einer Reifenseitenwand und einem Reifenwulst (1) mit einem Kern (3) und einem Kernprofil (2),
wobei das Kernprofil (2) den Kern (3) rotationssymetrisch zur axialen Achse (15) des Fahrzeugluftreifens umschließt und mindestens eine Karkasseinlage (10) um den Kern (3) mit dem Kernprofil (2) herumgeschlagen ist,
wobei der Reifenwulst (1) ein Reifenbauteil (4) mit einer Felgenhornmischung und eine daran sich anschließendes Reifenbauteil (5) mit einer Seitenwandmischung aufweist,
wobei die Felgenhornmischung eine signifikant härtere Gummimischung aufweist als die Seitenwandmischung,
**dadurch gekennzeichnet, dass**
die Außenseite des Reifenbauteiles mit der Felgenhornmischung in radialer Richtung (14) des Fahrzeugreifens die Höhe des Felgenhornes (4) in radialer Richtung (14) überragt,
wobei zwischen dem Reifenbauteil (4) mit der Felgenhornmischung und dem Reifenbauteil (5) mit der Seitenwandmischung eine Übergangslinie (9) mit einer Neigung angeordnet ist,
wobei die Übergangslinie (9) von dem oberen außenliegenden Eckpunkt (7) des Reifenbauteiles (4) mit der Felgenhornmischung zum unteren innenliegenden Eckpunkt (8) des Reifenbauteiles (4) mit der Felgenhornmischung verläuft,
wobei der Abstand (c) in radialer Richtung des Fahrzeugreifens zwischen dem oberen außenliegenden Eckpunkt (7) und dem unteren innenliegenden Eckpunkt (8) des Reifenbauteiles (4) mit der Felgenhornmischung mindestens 5 mm beträgt.

2. Fahrzeugluftreifen nach einem der vorhergehenden Ansprüche,
**dadurch gekennzeichnet, dass**
der Abstand in radialer Richtung (14) des Fahrzeugreifens zwischen dem oberen außenliegenden Eckpunkt (7) und dem unteren innenliegenden Eckpunkt (8) des Reifenbauteiles (4) mit der Felgenhornmischung mindestens 10 mm beträgt.

3. Fahrzeugluftreifen nach einem der vorhergehenden Ansprüche,
**dadurch gekennzeichnet, dass**
die Höhe (d) des Reifenbauteiles (4) mit der Felgenhornmischung in radialer Richtung (14) des Fahrzeugreifens um mindestens 3 mm die Höhe des Felgenhornes (12) in radialer Richtung (14) überragt.

4. Fahrzeugluftreifen nach einem der vorhergehenden Ansprüche,
**dadurch gekennzeichnet, dass**
der untere innenliegende Eckpunkt (8) des Reifenbauteiles (4) mit der Felgenhornmischung in radialer Richtung (14) des Fahrzeugreifens unterhalb der Höhe des Felgenhornes (13) in radialer Richtung liegt und der Abstand (e) mindestens 5 mm beträgt.

5. Fahrzeugluftreifen nach einem der vorhergehenden Ansprüche,
**dadurch gekennzeichnet, dass**
die Höhe (b) des oberen außenliegenden Eckpunktes (7) des Reifenbauteiles mit der Felgenhornmischung bezogen auf den unteren Felgeneckpunkt (6) des Reifenwulstes (1) zwischen 20 und 30 mm beträgt.

6. Fahrzeugluftreifen nach einem der vorhergehenden Ansprüche,
**dadurch gekennzeichnet, dass**
die Höhe (a) des unteren innenliegenden Eckpunktes (8) des Reifenbauteiles (4) mit der Felgenhornmischung bezogen auf den unteren Felgeneckpunkt (6) des Reifenwulstes (1) zwischen 5 und 20 mm, vorzugsweise ca. 10 mm, beträgt.

7. Fahrzeugluftreifen nach einem der vorhergehenden Ansprüche,
**dadurch gekennzeichnet, dass**
bei einem SUV-Reifen die Höhe (b) des oberen außenliegenden Eckpunktes (7) des Reifenbauteiles (4) mit der Felgenhornmischung bezogen auf den unteren Felgeneckpunkt (6) des Reifenwulstes (1) zwischen 25 und 30 mm beträgt, wobei die Höhe (a) des unteren innenliegenden Eckpunktes (8) des Reifenbauteiles (4) mit der Felgenhornmischung bezogen auf den unteren Felgeneckpunkt (6) des Reifenwulstes (1) zwischen 5 und 20 mm beträgt.
